# EUROPEAN PATENT SPECIFICATION

(11) **EP 3 121 773 B1**
(45) Date of publication and mention of the grant of the patent: **21.03.2018**
(21) Application number: 15290192.2
(22) Date of filing: 21.07.2015
(51) Int. Cl.: G06Q 10/06, G06Q 10/10, G06Q 50/30, G06F 9/50, G06F 9/54

(54) **COMMUNICATIONS MANAGEMENT SYSTEM WITH A SEPARATE PERIPHERALS SERVER**
KOMMUNIKATIONS-MANAGEMENTSYSTEM mit einem separaten PERIPHERALSSERVER
SYSTÈME DE GESTION DE COMMUNICATIONS AVEC UN SERVEUR DISTINCT DE PÉRIPHÉRIQUES

(43) Date of publication of application: 25.01.2017
(60) Divisional application: 17190929.4
(73) Proprietor: Amadeus S.A.S., 06410 Biot (FR)
(72) Inventor: Dersy, Julien, 06902 Sophia Antipolis Cedex (FR)
(74) Representative: Hnich-Gasri, Naïma

(56) References cited:
- US-A1- 2007 244 966
- US-A1- 2014 223 043

## Description

### TECHNICAL FIELD

Embodiments relate to communications management and, more particularly, to the management of communication between peripheral devices within a virtualized communications system for airports.

### BACKGROUND

Airport communication systems comprise a large number of terminals which are shared between a variety of airlines, each having their own departure control system (DCS). A departure control system is a server containing details relating to the departures for the airline (passenger records, flight details etc.). As the terminals are shared between airlines (for instance, at departure gates or check-in desks), each terminal must be able to communicate effectively with a variety of departure control systems. To this end, virtualization has been implemented such that the terminals themselves are clients of a virtualization server which runs virtual applications for the clients as disclosed for example in US2014/223043 A1 or US 2007/244966. This allows users working for different airlines to share the same terminal and, using the terminal as a basis, interact effectively with their airline's DCS (checking passengers in, accessing flight information, etc.).

The nature of airports is such that there are a large number of peripheral devices, many of which are not in common use outside of the airport environment (for example, baggage tag printers or boarding pass bar code scanners). These peripherals need to communicate with the terminals as well as the external servers to enable their operation based on up to date information as provided by the relevant departure control system.

Each terminal has a peripheral manager which contains drivers for peripherals connected to it and which establishes communication between the terminal and the peripherals. These peripheral managers are limited in their ability to communicate with server based (virtual) applications due to the use of non-static IP addresses and the need for IP address translation when communicating across networks comprising a mix of public and private addressing schemes.

One means of implementing communication between peripheral devices and various departure control systems is to direct communication based on fixed IP addresses and hostnames. This solution is problematic given the limited availability of public IP addresses and also present issues relating to security, firewalls and mobile data modes where 3G and/or 4G networks are used. Further problems arise from the need for many routing configurations that must be established and effectively managed, and the need to manage multiple stakeholders providing different elements of the communications, for example, airport authorities, network providers, airport information providers etc.

In addition, firewalls often block communication channels which are established by external devices, unless specific rules allowing communication from said devices have been established. This means that communication from an external virtualization server to peripherals within a local area network may well be blocked. To set up rules for each and every peripheral would be a complex and time consuming process for large networks, such as those implemented in airports.

Many virtualization protocols, however, do not allow external applications to establish and use virtual channels within the communication link between the virtualization server and the client.

Accordingly, there is a need for a flexible means of establishing communication between an application virtualized on an external server and a peripheral locally connected to a client.

### SUMMARY

According to a first aspect of the invention there is provided a system for managing an airport passenger processing system. The system comprises a computing device at an airport configured to execute a first client application, a peripheral device at the airport, a peripherals interface coupled with the peripheral device, the peripherals interface being configured to execute a second client application. The system further comprises a network outside the airport comprising a virtualization server configured to virtualize a virtualized application for the first client application. The first client application is configured to establishe a first communication channel with the virtualization server for communication with the virtualized application at the virtualization server. The second client application is configured to establish a second communication channel with the peripherals server. At least part of the network is configured to store an association between the first communication channel and the second communication channel to associate the peripheral device with the computing device.

By storing an association between the two communication channels, the system allows communication between the virtualized application and the peripheral device. Utilizing two communication channels, one for virtualization and one for peripherals management, provides a more flexible system which may be implemented in a variety of virtualization schemes. As each communication channel is initiated inside the airport, the peripherals manager and virtualization server can effectively communicate with the peripherals interface and computing device respectively over a mix of addressing schemes and without communications being blocked by an airport firewall.

The association may be stored by means of a map or table relating the first communication channel to the second communication channel. The network outside of the airport may be a single network, or may comprise a number of connected networks, for instance, a number of networks connected via the internet.

The peripherals server may be configured to receive messages from the virtualized application on the virtualization server and to send the messages, according to the association, to the peripheral device and/or the peripheral server is further configured to receive messages from the peripheral device and to send the messages, according to the association, to the virtualized application on the virtualization server. This facilitates communications between the peripheral device and the virtualized application.

The peripherals server may be configured to receive, from the virtualization server, a first identifier identifying the first client application, and to establish the association by matching the first identifier and a second identifier identifying the second client application.

In one embodiment, the first identifier may comprise one or more of a name of a computing device, an IP address of the computing device, a location of the computing device, the airport and terminal at which the computing device is located, and a first key generated by the first client application and/or the virtualized application, and the second identifier may comprise one or more of a name of a peripherals interface at the airport, an IP address of the peripherals interface, a location of the peripherals interface, the airport and terminal at which the peripherals interface is located, and a second key generated by the second client application and/or the peripherals server.

In one embodiment, the virtualization server or the computing device may comprise the peripherals server, or the peripherals server may be implemented on a server separate from the virtualization server or on a further computing device separate from the computing device or the computing device may comprise the peripherals interface.

There is further provided a system for virtualizing an application of an airport passenger control system, the system being located in a network outside of the airport. The system comprises a virtualization server configured to receive a request from a first client application executed at the airport to establish a first communication channel for communicative connection between a virtualized application executed by the virtualization server and the first client application and, in response, establish the first communication channel. The system further comprises a peripherals server configured to receive a request from a second client application executed at the airport to establish a second communication channel for communicative connection between the peripherals server and the second client application and, in response, establish the second communication channel. The system is configured to store an association between the first communications channel and the second communications channel to associate a peripheral device in communicative connection with the second client application with the first client application.

According to an embodiment, the peripherals server may be further configured to receive messages from the virtualized application on the virtualization server, and to send the messages, according to the association, to the peripheral device; and/or the peripherals server may be configured to receive messages from the peripheral device, and to send the messages, according to the association, to the virtualized application on the virtualization server.

According to one embodiment, the peripherals server may be configured to receive, from the virtualization server, a first identifier identifying the first client application, and to establish the association by matching the first identifier and a second identifier identifying the second client application. According to one embodiment, the first and second identifiers may be matched if they are identical. Alternatively, the peripherals manager may be configured to match the first and second identifiers if the first and second identifiers are within a predefined threshold of each other, or according to a selection received from the virtualized application.

By matching based on a predefined threshold, similar identifiers may be matched even if there is no exact match. For instance, this may be the case where the identifiers are positions and the predefined threshold is a predefined distance between the computing device and the peripherals interface. Alternatively, the identifiers may be the name of the computing device and peripheral device, and the threshold may be a numerical difference between one or more corresponding characters in the names. For instance, where the computing device is named "workstation1" and the peripherals interface is named "workstation3", the identifiers may be matched if the threshold is 2 in relation to the final character in the names.

By matching based on a selection received from the virtualized application, the user or application may define the match, and therefore select a specific peripherals interface to use. This selection may originate from the virtualized application, or may be input by a user via the computer terminal.

The first identifier may comprise one or more of the name of the computing device, an IP address of the computing device, a location of the computing device, the airport and terminal at which the computing device is located, and/or a first key generated by the first application and/or the application virtualized. The second identifier may comprise one or more of the name of the peripherals interface, an IP address of the peripherals interface, a location of the peripherals interface, the airport and terminal at which the peripherals interface is located, and a second key generated by the second application and/or the peripherals server.

Accordingly, where the first and second identifiers represent the locations of the computing device and peripherals interface respectively, the peripheral server may match the first and second identifiers if the computing device and peripherals interface are within a predefined threshold distance of each other. This allows a user to be assigned a nearby peripheral device.

The virtualization server or the computing device may comprise the peripherals server. That is, the peripherals server may be run on the virtualization server to share resources. Alternatively, the peripherals server may be implemented on a server separate from the virtualization server or on a further computing device separate from the computing device or the computing device may comprise the peripherals interface.

There is further provided a system for interacting with a peripheral device located at an airport and a network outside the airport, the network including a virtualization server configured to execute a virtualization application, the system comprising:
a computing device located at the airport and configured to initialize a first client application, send a first request to establish a first communication channel to the virtualization server, and to allow communication with the virtualization application. The network further comprises a peripherals server. The system further comprises a peripherals interface coupled with the peripheral device, the peripherals interface being configured to send a second request to establish a second communication channel to the peripherals server. The computing device is further configured to send a first identifier to the virtualization server, and the peripherals interface is further configured to send a second identifier to the peripherals server to facilitate an association of the first communication channel and the second communication channel.

By sending first and second identifiers, the system ensures that the first and second communication channels may be identified and associated with each other. This allows the virtualized application to communicate with the peripheral device via the peripherals interface.

The peripherals interface may be further configured to send first data received from the peripherals server to the peripheral device, or to send second data received from the peripheral device to the peripherals server or the computing device may comprise the peripherals interface.

In an embodiment, the first identifier may comprise one or more of a name of the computing device, an IP address of the computing device, a location of the computing device, the airport and terminal at which the computing device is located, and a first key generated by the first client application and/or a virtualized application, and the second identifier may comprise one or more of a name of the peripherals interface, an IP address of the peripherals interface, a location of the peripherals interface, the airport and a terminal at which the peripherals interface is located, and a second key generated by the peripherals interface and/or the peripherals server.

### BRIEF DESCRIPTION OF THE DRAWINGS

Embodiments of the present invention will be understood and appreciated more fully from the following detailed description taken in conjunction with drawings.
Figure 1 shows a network according to an embodiment of the invention.
Figure 2 shows a client workstation for implementing the client side processes according to an embodiment of the invention.
Figure 3 shows a virtualization server.
Figure 4 shows the communication steps between the client workstation and the virtualization server when establishing a virtual session.
Figure 5 shows the communication between the peripherals client and the peripherals manager when a virtual session is established.
Figure 6 shows the communication between the components in the network when an application instructs a peripheral device to perform an action.
Figure 7 shows the communication between the components in the network when a peripheral device communicates with a virtual session.

### DETAILED DESCRIPTION

Embodiments of the invention help to overcome difficulties related to local network devices accessing globally available services.

End user devices, such as terminals and peripheral devices, including scanners and printers, are usually located on a local network environment in an airport. Data transmission between such devices and data sources outside of the local network is channeled through routers (gateways). Whilst these are free to contact data sources outside of the local network on behalf of the connected end user devices and without being inhibited by a firewall protecting the local network from unauthorized access, external data sources or systems cannot normally establish contact with components within the local network without interference or being blocked by the firewall. This is partly because native IP addresses in the local area network are hidden to external networks. It is consequently difficult for a system external to the local network/outside of the firewall to target an end user device.

Commercial off the shelf virtualization solutions exist on the market and provide multiple forms of hardware emulation; however they are not designed for specialist devices such as those used in Airports. These devices will expect very low latency when using interfaces such as RS-232 or Parallel (LPT) (<100ms), or there can be significant bandwidth utilisation caused by the hardware level protocols such as with USB interfaces; therefore software has to reside on the client to facilitate rapid communication. With virtualization, the end user applications are executed on a server external to the client. The end user application (running on the server) has to believe that it is connecting to local devices as if it was installed on the client itself. For this to happen, the virtualization framework is enhanced with a device server designed to emulate local devices normally found by an end user application running on a local PC. This device server will also receive connection requests initiated directly from an application executing on the client workstation thus opening a communication channel to be used indirectly by the server application. As the communication channel is initiated on the client side, the router is able to route communications from the device server to the device, and the firewall allows this communication channel.

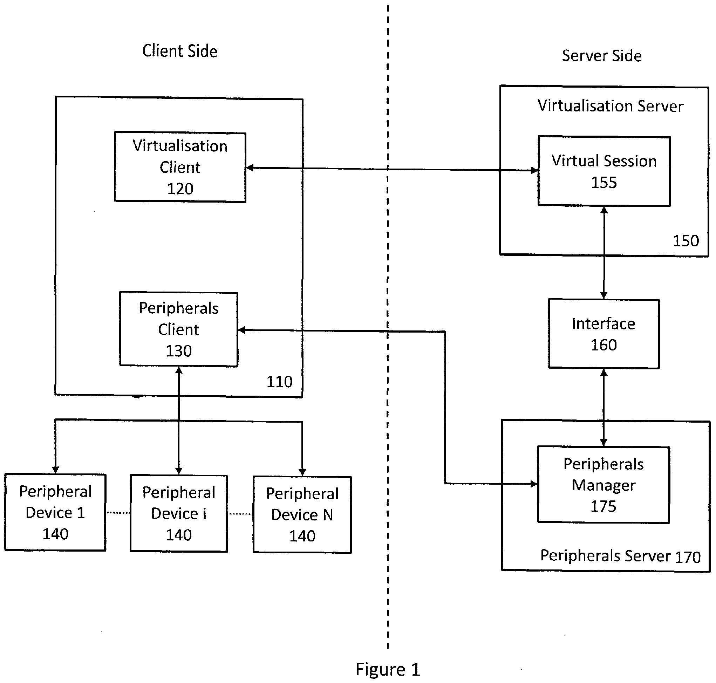

Figure 1 shows a network according to an embodiment of the invention. The dashed line separates the client side located within the airport and a server side. Data traffic across this interface between the two sides is controlled by a firewall (not illustrated) in a known manner. Arrows indicate paths of communication between components of the network.

The client side comprises a client workstation 110 and associated peripheral devices 140. The server side comprises a virtualization server 150 for hosting virtualized applications for the client workstation 110, a peripherals server 170 for facilitating communication between the applications hosted on the virtualization server 150 and peripheral devices 140 located on the client side of the network, and an interface 160 for facilitating communication between the virtualization server 150 and the peripherals server 170.

The server side of the network can comprise one or more physical servers. The virtualization server 150 may, for example, be a different physical device to the peripherals server 170. Both servers may be co-located in a particular location or located in different locations, possibly even large physical distances apart. Some of these servers, such as the Peripherals Server 170, could be located close to the workstations 110, such as within the airport in which the workstations 110 are deployed. This said, in one embodiment the virtualization server 150 and the peripherals server 170 can also be servers that run on the same physical device. For reasons of redundancy this is, however, not preferred. In an embodiment both the virtualization server 150 and the peripherals server 170 serve multiple airports at the same time. A number of components such as gateways and other infrastructure elements are not shown in Figure 1 for clarity.

The client workstation 110 is a device which runs and provides a user interface for a virtualization client 120 on the client side of the network. The client workstation 110 may take any form of computing device and may, for example, be a thin or zero client, a standard computer terminal or any other form of computing device able to implement an appropriate user interface and able to communicate with servers.

The virtualization client 120 is an application which provides the client side of the virtualization solution. This may be Microsoft™ Remote Desktop, Citrix Desktop Receiver™ or VMware™ Workstation.

The client workstation 110 also runs the peripherals client 130 which manages, on the client side, the communication between a number, N, of peripheral devices 140 and the peripherals server 170. The peripheral devices 140 may comprise common peripheral devices such as scanners, printers, cameras etc. Alternatively, or in addition, the peripheral devices 140 may also comprise non-standard peripheral devices such as those found in airports (boarding pass printers, bag tag printers, document printers, magnetic swipe readers, optical character recognition readers, gate readers, optical character recognition readers, etc.). The peripheral devices 140 may be directly connected to the client workstation 110 (e.g. via a USB connection) or may be connected to the client workstation 110 over a local area network such as a wireless network.

The virtualization server 150 hosts the virtualized applications for interaction with the virtualization clients 120. The virtualization server 150 may be a single server or may be a farm of similar servers for scalability and resilience purposes. For each user accessing the virtualization server 150 via a respective virtualization client 120 a corresponding virtualization session 155 is established. This virtualization session 155 runs the virtualized application which is hosted on the virtualization server 150. The virtualization session 155 may comprise a virtual instance of an operating system or may be a container for virtualizing an application. The virtualization session 155 runs the application being virtualized and communicates with the virtualization client 120 to provide application outputs and receive user inputs.

The peripheral device server 170 is a device which manages, on the server side, the communication between peripheral devices 140 and the virtual session 155. As with the virtualization server 150, the peripherals server 170 may be a single server or may be a farm of similar servers. The peripheral device server 170 runs a peripherals manager 175 which utilizes contextual information to ensure that the application being executed on the server 150 is communicating with the corresponding peripheral devices 140 connected to the client workstation 110.

As shall be described below, the peripherals manager 175 utilizes peripherals and virtualization identification information to establish a link between the peripheral devices 140 associated with the virtualization client 120 and the corresponding virtual session 155. The peripherals ID identifies the peripherals client 130 whilst the virtualization ID identifies the virtualization client 120. The identification information may be one or a combination of any of the following: workstation name, workstation IP address (e.g. IPv4 or IPv6), a unique key, any other unique token generated and shared for associating the virtualized application with a peripherals client 130. It will be appreciated that the purpose of the peripherals ID and the virtualization ID is to enable unambiguous communication between the peripheral devices 140 and the virtual session 155 and/or the virtualization client 120 via the server side. For this purpose it is not important if the identification information is issued from the client side, say by the virtualization client 120 or peripherals client 130 or by the sever side, say by the virtualization server 150 or the peripherals server 170.

The interface 160 facilitates communication between the application running on the virtualization server 150 and a peripherals manager 175 running on the peripherals server 170, so that any operation of the peripheral devices 140 that may be required by the virtualization session 155 running on virtualization server 150 on behalf of the virtualization client 120 can be implemented by means of an interaction between the peripherals sever 170 and the peripherals client 130.

The interface 160 may emulate a standard physical interface, such as a serial COM port, a USB, a parallel port. Alternatively an API may be provided (in a common use terminal equipment (CUTE) mode) such as the common use passenger processing system (CUPPS) standard (RECOMMENDED PRACTICE 1797, part of Passenger Services Conference Resolutions Manual (aka PSC)) defined by the International Air Transport Association (IATA). The interface 160 may form part of the virtualization server 150, the peripherals server 170 or may be external to both, being executed on a separate device. The interface 160 may be incorporated into the peripherals manager 175 or the virtual session 155.

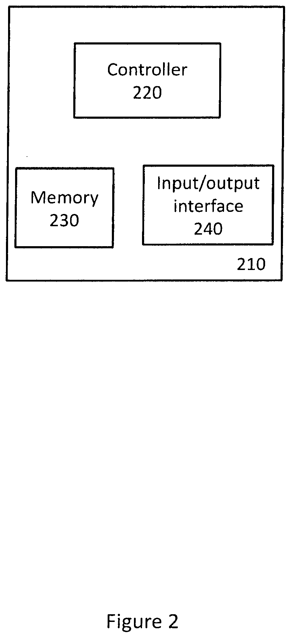

Figure 2 shows a client workstation 210 for implementing the client side processes according to an embodiment of the invention. The client workstation 210 comprises a controller 220, memory 230 coupled with the controller 220, and an input/output interface 240. The controller 220 is in communicative connection with the memory 230 and the input/output interface 240. The memory 230 stores computer executable program code that, when executed by the controller 220 is configured to implement the functions of the client workstation 210 as discussed herein. In particular, the code stored in the memory 230 is configured to, when executed by the controller 220, run a virtualization client for communication with an external virtualization sever 150 and a peripherals client 130 for communicating with an external peripherals server 170. Input/output interface 240 is configured to allow the controller 220 to communicate with the peripheral devices 140 in communicative connection with the client workstation and to communicate with the virtualization 150 and peripherals 170 servers, for instance, via a router.

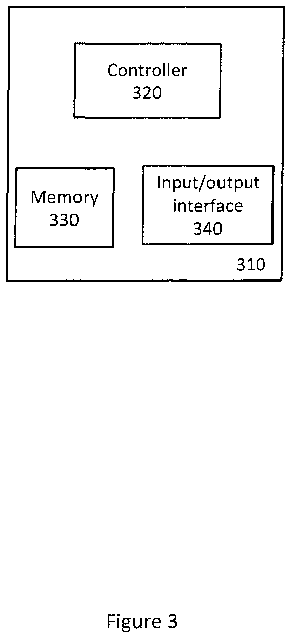

Figure 3 shows a virtualization server 310. The virtualization server 310 comprises a controller 320, memory 330 coupled with the controller 320, and an input/output interface 340. The controller 320 is communicatively connected to the memory 330 and the input/output interface 340. The memory 330 stores computer executable program code that, when executed by the controller 320 is configured to implement the functions of the virtualization server 310 as discussed herein. In particular, the controller 320 is configured to run one or more virtual sessions, each virtualizing an application for a corresponding virtualization client. Input/output interface 340 is configured to allow the controller 320 to communicate with a virtualization client 120 on a client workstation 110/210 and with a peripherals manager 175 on a peripherals server 170 via interface 160.

The peripherals server may be a server much like that shown in Figure 3. In this case, instead of the memory 330 storing computer executable program code that, when executed by the controller 320, runs virtualization sessions, the computer executable program code is configured to run the peripherals manager. Moreover, the input/output interface 340 is configured to communicate with a peripherals client 130 and with a virtual session on a virtualization server via an interface.

Each of the controllers 220, 320 may include one or more processors including at least one hardware-based microprocessor. Each of the memories 230, 330 may represent the random access memory (RAM) devices comprising the main storage, as well as any supplemental levels of memory, e.g., cache memories, non-volatile or backup memories (e.g., programmable or flash memories), read-only memories, etc. In addition, the memories 230, 330 may be considered to include memory storage physically located elsewhere in the respective computer system, e.g., any cache memory in a microprocessor, as well as any storage capacity used as a virtual memory, e.g., as stored on a mass storage device or on another interconnected computer. Each of the controllers 220, 320 typically operates under the control of an operating system and executes or otherwise relies upon various computer software applications, components, programs, objects, modules, engines, data structures, etc. Each of the controllers 220, 320 may have access to a database used as a data store to collect and organize data required to implement the functions of client workstation 210, the virtualization server 310, the peripherals server, etc.

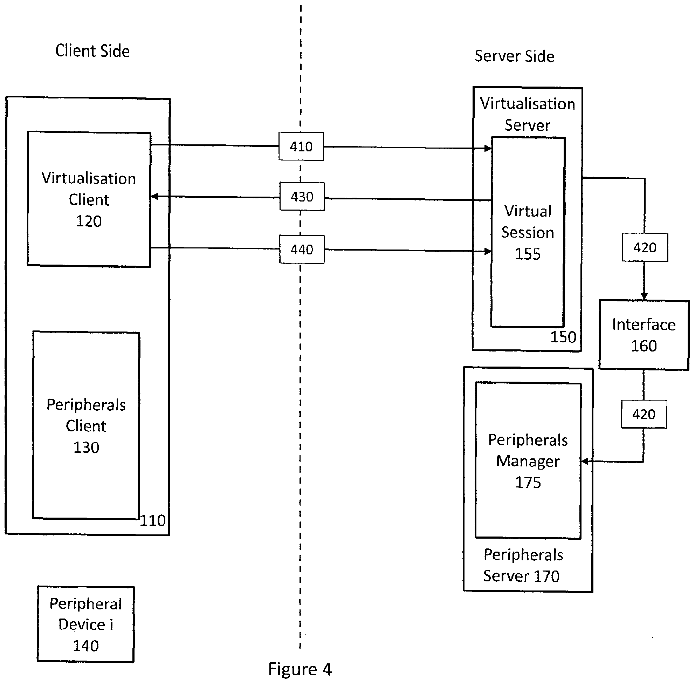

Figure 4 shows the communication steps between a client workstation 110 and the virtualization server 150 when establishing a virtual session 155. The user/operator starts the virtual client 120 when he or she starts to use the workstation 110. Once the virtualization client 120 has been initiated it sends an instruction 410 to the virtualization server 150 to establish a virtual session 155. As the instruction 410 has originated from the virtualization client 120/workstation 110, the firewall separating the client side from the outside world and consequently also from the servers 150 and 170 will allow the instruction 410 to pass unimpeded. With the issue of the instruction 410 a communication channel is established between the virtualization client 120 running on workstation 110 and the virtualization session 155 running on virtualization server 150.

In the embodiment, the instruction includes information identifying the user. The virtualization server 150 determines a virtualization ID based on this information and sends 420 this virtualization ID to the peripherals manager 175 via interface 160 to allow the peripherals manager 175 to link the virtualization client 120 or the virtual session 155 to the peripherals client 130 or associated peripheral devices 140. The virtualization ID includes client identification information, such as, user identification (UID), workstation name (WN), workstation IP address (WIP), the name of the airport and terminal building from which the connection is being made (APT), a token (TOK) (such as a structured element) generated by the workstation 110, localisation information (e.g. from GPS, beacon or other), or any other information which could identify the virtualization client 120.

Once the virtualization session 155 has been established, the application running in the virtualization session 155 can perform its required functions and transmit output information 430 to the virtualization client 120. The virtualization client 120 provides a user interface allowing the user to interact remotely with the application running in the virtual session 155. Any inputs from the user, such as mouse movements or keyboard inputs, are communicated 440 to the virtualization session 155 by the virtualization client 120. Steps 430 and 440 are repeated throughout the virtual session to allow the user to remotely control the application.

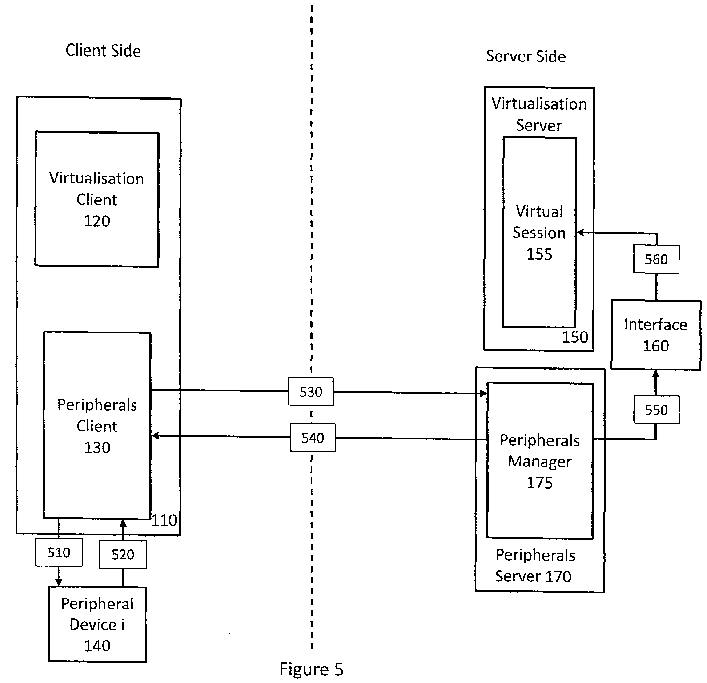

Turning now to the operation of the peripherals client 130 and the peripherals manager 175, Figure 5 shows the communication between the peripherals client 130 and the peripherals manager 175 when establishing a communication channel between the peripherals client 130 and the peripherals manager 175. In situations in which the workstation 110 is connected to the peripheral devices 140 through physical communications links that uniquely associate the peripheral devices 140 with the workstation 110 the peripherals client 130 initially sends a connection request 510 to any available peripheral devices 140. The available peripheral devices 140 respond 520 to allow the peripherals client 130 to determine the peripheral devices 140 to which it is connected. If a number of peripheral devices 140 are permanently connected to the workstation 110, then the workstation may of course already possess a list of these connected devices, so that there is no need for any such identification when the peripherals client 130 is initiated.

Once initialized the peripherals client 130 establishes a connection with the peripherals server 170, which in turns initiates the peripherals manager 175. The peripherals client 130 sends 530 to the peripherals manager 175 a connection request including information identifying the peripherals client 130. The information identifying the peripherals client 130 is a peripherals ID and may include identification information, such as, user identification (UID), workstation name (WN), workstation IP address (WIP), the name of the airport and terminal from which the connection is being made (APT), a token (TOK) (such as a structured element) generated by the workstation 110, localisation information (e.g. from GPS, beacon or other), or any other information which could identify the peripherals client 130.

With the issue of the connection request 530 a communication channel is established between the peripherals client 130 running on workstation 110 and the peripherals manager 175 running on peripherals server 170.

The peripherals manager 175 stores the peripherals ID received from the peripherals client 130 and determines whether a corresponding virtualization session 155 has been established, i.e. whether a matching virtualization ID has been received from the virtualization server 150. A virtualization ID is considered matching if it is the same as the peripherals ID or if it is known or deemed likely, based on the information available to the device on the server side, that the virtualization client 120 is running on a workstation 110 that is associated and/or in physical proximity with peripheral device(s) 140 that are connected to the peripherals client 130 that has issued/is identified by the peripherals ID. If a corresponding virtualization session 150 is running, then the peripherals manager 175 associates the peripherals communication channel with the virtualization communication channel. This association can, for example, be achieved via a mapping table associating the peripherals ID with the virtualization ID. Directional mapping tables of each data element may be used. If no corresponding virtualization ID has been received, then the peripherals manager 175 stores the peripherals ID received from the peripherals manager 130 and waits for a matching virtualization ID to be received from the virtualization server 155. It will be appreciated that a mapping table may not be required if peripherals ID and virtualization ID match. However, even in situations of this nature the use of mapping table may be advantageous, given that it allows associating virtualization and peripheral IDs if doing so automatically is not possible or fails.

The mapping table may store known associations between virtualization clients 120 operating on a particular workstation 110 or the particular workstation 110 itself with the surroundings of the workstation 110. For example, the mapping table may store information for one or more workstations 110 identifying peripheral devices 140 in the vicinity of the workstation 110 or that had previously been used for connecting to a virtualization client 120 running on the workstation 110. In this fashion an association between a virtualization ID and a peripherals ID can be created using the mapping table in situations in which the two IDs are not automatically deemed to be matching. Alternatively or additionally the virtualization server 150 may be configured to cause the virtual session 155 associated with a particular virtualization ID to display a user interface to the user as part of the virtualization client 120, prompting the user to select a peripheral device 140 for use with the current virtualization client 120. Ways of providing such a selection to a user are known in the art and will for this reason not be described in any more detail herein.

The peripherals manager 175 matches the peripherals and virtualization IDs based on a set of rules. The rules may state that one or more of the parameters in the IDs must be the same for a match to be determined. In one embodiment, the peripherals and virtualization IDs comprise a workstation name and a match is determined if the workstation names are the same. In an alternative embodiment, the IDs comprise the IP address of the workstation 110 and the terminal and airport at which the workstation 110 is located and a match is determined if the IP addresses and the terminal and airports are the same.

In a further embodiment, a match may be determined if the IDs contain similar parameters. For instance, where the IDs comprise localisation information, a tolerance may be defined such that a match is determined if the localisation information indicates positions within a given distance from each other. This allows a virtualization client 120 to be connected to nearby peripheral devices 140.

In an alternative embodiment, a match may be determined based on a user or application selection. The peripherals manager 175 provides a list of available peripherals clients 130 to the virtualized application. The virtualized application, either autonomously or in response to input from the user via the virtualization client 120, then issues a selection of one of the peripherals clients 130. Based on this selection, the peripherals manager 175 matches the virtualization ID of the virtualized application to the peripherals ID of the selected peripherals client.

A list of the peripheral devices 140 to which it is connected may also be sent. The peripherals manager 175 then uses this information to store a record of the peripheral devices which are available to the virtualization client 120. Optionally, the peripherals manager 175 then sends to the peripherals client 130 a confirmation 540 that the available peripheral devices 140 have been successfully registered. The peripherals manager 175 also sends 550 a list of available devices and the unique ID to the interface 160. The interface 160 directs the list of available devices 560 to the appropriate virtual session based on the association between the virtualization and peripherals IDs. This informs the virtualized application of the peripheral devices 140 which are available to it. The virtualization session 155 may further send the list of available devices to the virtualization client 120 in the form of an output to report to the user.

In an alternative embodiment, no list of available devices is sent to the virtualization application. Instead, the virtualization application is preconfigured with a list of one or more expected peripheral devices 140. This embodiment is based on the assumption that each client workstation 110 has a given set of working peripheral devices 140 associated with it. This offers a simpler implementation; however, the list of expected peripheral devices 140 may not always be accurate.

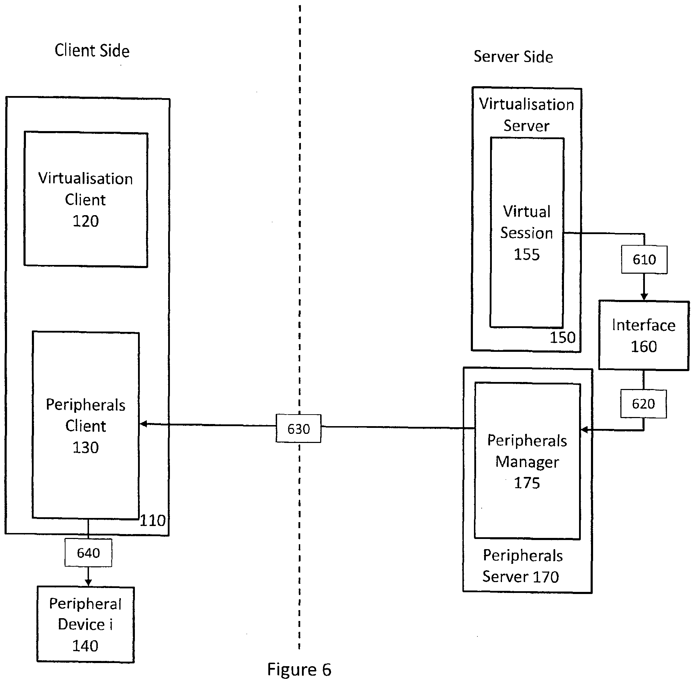

Figure 6 illustrates the communication between the components in the network when a virtualization session 155 instructs a peripheral device 140 to perform an action. The virtual session 155 sends an instruction 610 to the interface 160. The instruction 610 may be initiated by the application, or may be initiated by the user instructing the application, via the virtualization client 120, to utilize the peripheral device 140. The instruction may be, for instance, an instruction to print a document. The interface sends the instruction 620 to the peripherals manager 175. The instruction may contain the virtualization ID for the virtualized application. The peripherals manager 175 determines the peripherals client 130 associated with the virtualization ID and sends the instruction 630 to the peripherals client 130 via the communication channel established between the peripherals manager 175 and the peripherals client 130. The peripherals client 130 then forwards the instruction 640 to the peripheral device 140. Optionally, once the action has been completed as instructed, the peripheral device 140 sends a confirmation back to the virtualization session 155 via the reverse of the communication path taken by the instruction.

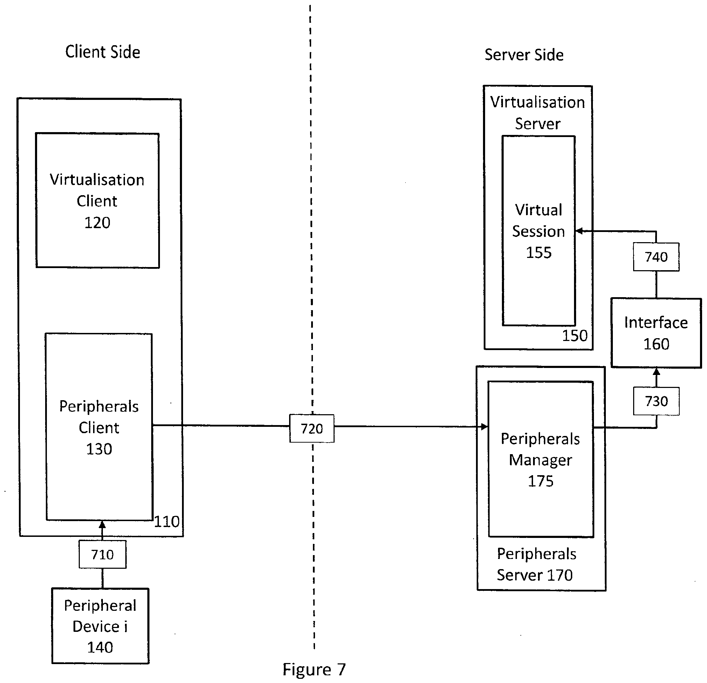

Figure 7 shows the communication between the components in the network when a peripheral device 140 communicates with a virtual session 155. The peripheral device 140 sends data 710 to the peripherals client 130. This data may be, for instance, a scanned image or a reading from a bar code scanner. The peripherals client 130 sends the data 720 to the peripherals manager 175 via the communication previously established between the peripherals client 130 and the peripherals manager 175. The peripherals manager 175 knows which virtual session 155 to send the data to due to the stored association between the peripherals client 130 and the virtual session 155. The peripherals manager 175 forwards the data 730 to the interface 160 which in turn sends the data 740 to the virtual session 155. The interface 160 may convert the data for appropriate use with the virtualized application before sending the converted data on. The virtualized application can then process the data as required, for instance, check a passenger in when a boarding pass has been scanned. The virtualization session 155 may then send this data, or information derived from the data, to the virtualization client 120 so that it may be reported to the user and/or passed to the backend system to which the application is connected (if connected).

Embodiments of the invention establish a communication channel between a peripherals client 130 and a peripherals manager 175 to facilitate the communication between peripheral devices 140 and applications running on a virtualization server 150. As the communication channel is established by the peripherals client 130 running on a client workstation 110, no communications are blocked by any client side firewalls and the router is aware of the client workstation 110 so that it may forward communications from the virtualization server. This ensures effective communication across a variety of networks with both public and private addressing schemes.

Moreover, establishing independent communication channels for the communication streams between the virtualization client 120/virtualization session 155 and between the peripherals client 130 and the peripherals manager 175 respectively the embodiments can be implemented with existing standard virtualization schemes and do not need to apply, as is the case in known other methods of virtualizing applications in airport terminals, modifications to virtualization schemes to enable the use of virtual channels.

By insulating the peripheral device communication channel from the virtualization technology this enables the use of multiple technologies at the same workstation 110. These may offer differing virtualization solutions but also other forms of front-end deliveries such as HTML and an easier adoption of future evolutions. It also enables the sharing of peripheral devices 140 across multiple types of client devices, such as tablets, mobile phones, phablets, workstations on cruise ships, peripherals on-board aircraft etc. regardless of the operating system they use and independent of the user interface technology used (virtualized or not). Accordingly, whilst embodiments described herein discuss virtualizing an application via a client workstation 110, this workstation 110 may be any form of computing device, such as tablets, mobile phones, etc. as discussed above.

Various modifications and alternatives to the above embodiments are envisaged. In the embodiment of Figure 2, the client workstation 210 is a normal computer terminal which runs the virtualization client and the peripherals client based on computer code stored in memory 230. In further embodiments, the client workstation 210 is a thin client or a zero client with no hard drive. Where the client workstation 210 is a zero client, it comprises a controller specifically configured to run the virtualization and peripherals clients.

Whilst the embodiment of Figure 1 shows the virtualization server 150 and the peripherals server 170 as separate servers, in an alternative embodiment, the virtual session 150 and the peripherals manager 175 are operated on the same server or set of servers. Accordingly, the two channels required to communicate with the virtualization client 120 and the peripherals client 130 may be established using the same device

Furthermore, whilst in the embodiments of Figures 1 and 2 the virtualization client 120 and peripherals client 130 are implemented on the same device, the client workstation 110, in an alternative embodiment, the peripherals client 130 is implemented on a separate device to the client workstation 110.

It will, moreover, be appreciated that, whilst in one embodiment all peripheral devices 140 that are either physically connected or are connectable, via a data connection, to a workstation 110 can be managed by the peripherals client 130 (and mapped to a virtual session 155 for control by the user via the virtualization client 120), in another embodiment fewer than all of the peripheral devices 140 or even just one particular peripheral device 140, for example a bag tag or boarding pass printer or a scanner, may be associated with the virtualization client 120 in this manner.

It is moreover envisaged that the above mentioned mapping table not only stores information that associates a virtualization client 120 running on a particular workstation 110 with peripheral devices 140 connected or connectable to a specific peripherals client 130 but also information that associates the virtualization client 120 with a further or several further peripherals clients 130 for use, should during operation the peripherals client 130, or one or more devices operating in conjunction with it, fail. The additional peripherals client(s) 130 and device(s) 140 mapped to the virtualization client 120 in this fashion can then be used to take the place of the defective peripherals client 130/peripheral device 140.

In one embodiment, a secondary peripherals client, in addition to the peripherals client 130, is associated with the virtualized application. The secondary peripherals client provides a back-up in the event that the peripherals client 130 fails. If connection is lost to the peripherals client 130 or if the peripherals client 130 stops working, the peripherals manager 175 automatically switches to the secondary peripherals client to provide access to alternative peripheral devices. The secondary peripherals client 130 may be located on the same workstation 110 as the peripherals client 130, or may be located on a different workstation. In a further embodiment, the secondary peripheral device may be connected to alternative peripheral devices and the connection may be swapped to the secondary peripherals client in the event that one of the peripheral devices 140 fails.

Whilst the above embodiments discuss the peripherals manager 175 providing and storing the association between the peripherals communication channel and the virtualization communication channel, the virtualization server 150 may instead implement this functionality, with the peripherals manager merely providing the communication link to the peripherals client 130.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions which are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

Various program code described herein may be identified based upon the application within which it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flowcharts, sequence diagrams, and/or block diagrams.

In certain alternative embodiments, the functions, acts, and/or operations specified in the flowcharts, sequence diagrams, and/or block diagrams may be re-ordered, processed serially, and/or processed concurrently consistent with embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of', or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A system for managing an airport passenger processing system, the system comprising:
a computing device (110) at an airport, the computing device (110) configured to execute a first client application (120);
a peripheral device (140) at the airport;
a peripherals interface coupled with the peripheral device (140), the peripherals interface configured to execute a second client application (130); and
a network outside the airport, the network comprising:
a virtualization server (150) configured to virtualize a virtualized application (155) for the first client application (120),
wherein the first client application (120) is configured to establish a first communication channel with the virtualization server (150) for communication with the virtualized application (155) at the virtualization server (150),
**characterised in that**:
the system further comprises a peripherals server (170) in communicative connection with the virtualization server (150);
the second client application (130) is configured to establish a second communication channel with the peripherals server (170); and
at least part of the network is configured to store an association between the first communication channel and the second communication channel to associate the peripheral device (140) with the computing device (110).

2. The system of claim 1 wherein the peripherals server (170) is further configured to receive messages from the virtualized application (155) on the virtualization server (150), and to send the messages, according to the association, to the peripheral device (140); and/or wherein the peripherals server (170) is further configured to receive messages from the peripheral device (175), and to send the messages, according to the association, to the virtualized application (155) on the virtualization server (150).

3. The system of claim 1 or 2 wherein the peripherals server (170) is configured to receive, from the virtualization server (150), a first identifier identifying the first client application (120), and to establish the association by matching the first identifier and a second identifier identifying the second client application (130).

4. The system of claim 3 wherein the first identifier comprises one or more of a name of a computing device (110), an IP address of the computing device (110), a location of the computing device (110), the airport and terminal at which the computing device (110) is located, and a first key generated by the first client application (120) and/or the virtualized application (155), and the second identifier comprises one or more of a name of a peripherals interface at the airport, an IP address of the peripherals interface, a location of the peripherals interface, the airport and terminal at which the peripherals interface is located, and a second key generated by the second client application (130) and/or the peripherals server (170).

5. The system of any of claims 1 to 4 wherein the virtualization server (150) or the computing device (110) comprises the peripherals server (170), or the peripherals server (170) is implemented on a server separate from the virtualization server (150) or on a further computing device separate from the computing device (110) or the computing device (110) comprises the peripherals interface.

6. A system for virtualizing an application of an airport passenger control system, the system being located in a network outside of the airport, the system comprising:
a virtualization server (150) configured to receive a request from a first client application (120) executed at the airport to establish a first communication channel for communicative connection between a virtualized application (155) executed by the virtualization server (150) and the first client application (120) and, in response, establish the first communication channel; and
**characterised in that**:
the system further comprises a peripherals server (170) configured to receive a request from a second client application (130) executed at the airport to establish a second communication channel for communicative connection between the peripherals server (170) and the second client application (130) and, in response, establish the second communication channel; and
the system is configured to store an association between the first communications channel and the second communications channel to associate a peripheral device (140) in communicative connection with the second client application (130) with the first client application (120).

7. The system of claim 6 wherein the peripherals server (170) is further configured to receive messages from the virtualized application (155) on the virtualization server (150), and to send the messages, according to the association, to the peripheral device (140); and/or wherein the peripherals server (170) is further configured to receive messages from the peripheral device (140), and to send the messages, according to the association, to the virtualized application (155) on the virtualization server (150).

8. The system of claim 6 or 7 wherein the peripherals server (170) is configured to receive, from the virtualization server (150), a first identifier identifying the first client application (120), and to establish the association by matching the first identifier and a second identifier identifying the second client application (130).

9. The system of claim 8 wherein the first identifier and the second identifier are matched if identical.

10. The system of claim 8 or 9 wherein the peripherals server (170) is configured to match the first identifier and the second identifier if the first identifier and the second identifier are within a predefined threshold of each other, or according to a selection received from the virtualized application (155).

11. The system of any one of claims 8 to 10 wherein the first identifier comprises one or more of a name of a computing device (110), an IP address of the computing device (110), a location of the computing device (110), the airport and terminal at which the computing device (110) is located, and a first key generated by the first client application (120) and/or the virtualized application (155), and the second identifier comprises one or more of a name of a peripherals interface at the airport, an IP address of the peripherals interface, a location of the peripherals interface, the airport and terminal at which the peripherals interface is located, and a second key generated by the second client application (130) and/or the peripherals server (170).

12. The system of any one of claims 6 to 11 wherein the virtualization server (150) or the computing device (110) comprises the peripherals server (170), or the peripherals server (170) is implemented on a server separate from the virtualization server (150) or on a further computing device separate from the computing device (110) or the computing device (110) comprises the peripherals interface.

13. A system for interacting with a peripheral device (140) located at an airport and a network outside the airport, the network including a virtualization server (150) configured to execute a virtualization application (155), the system comprising:
a computing device (110) located at the airport and configured to initialize a first client application (120), send a first request to establish a first communication channel to the virtualization server (150), and to allow communication with the virtualization application (155),
**characterised in that**:
the network further comprises a peripherals server (170);
the system further comprises a peripherals interface coupled with the peripheral device (140), the peripherals interface configured to send a second request to establish a second communication channel to the peripherals server (170); and
the computing device (110) is further configured to send a first identifier to the virtualization server (170), and the peripherals interface is further configured to send a second identifier to the peripherals server (170) to facilitate an association of the first communication channel and the second communication channel.

14. The system of claim 13 wherein the peripherals interface is further configured to send first data received from the peripherals server (170) to the peripheral device (140), or to send second data received from the peripheral device (170) to the peripherals server (170) or the computing device (110) comprises the peripherals interface.

15. The system of claim 13 or 14 wherein the first identifier comprises one or more of a name of the computing device (110), an IP address of the computing device (110), a location of the computing device (110), the airport and terminal at which the computing device (110) is located, and a first key generated by the first client application (120) and/or a virtualized application (155), and the second identifier comprises one or more of a name of the peripherals interface, an IP address of the peripherals interface, a location of the peripherals interface, the airport and a terminal at which the peripherals interface is located, and a second key generated by the peripherals interface and/or the peripherals server (170).

## Patentansprüche

1. System für das Management eines Flughafen-Passagierverarbeitungssystems, wobei das System Folgendes umfasst:
eine Rechnervorrichtung (110) in einem Flughafen, wobei die Rechnervorrichtung (110) zur Ausführung einer ersten Client-Anwendung (120) konfiguriert ist;
eine Peripherievorrichtung (140) in dem Flughafen;
eine mit der Peripherievorrichtung (140) verbundene Peripheralsschnittstelle, wobei die Peripheralsschnittstelle zur Ausführung einer zweiten Client-Anwendung (130) konfiguriert ist, und
ein Netzwerk außerhalb des Flughafens, wobei das Netzwerk Folgendes umfasst:
einen Virtualisierungsserver (150), der zur Virtualisierung einer virtualisierten Anwendung (155) für die erste Client-Anwendung (120) konfiguriert ist,
wobei die erste Client-Anwendung (120) zur Einrichtung eines ersten Kommunikationskanals mit dem Virtualisierungsserver (150) zur Kommunikation mit der virtualisierten Anwendung (155) an dem Virtualisierungsserver (150) konfiguriert ist,
**dadurch gekennzeichnet, dass**:
das System darüber hinaus einen Peripheralsserver (170) in kommunikativer Verbindung mit dem Virtualisierungsserver (150) umfasst;
die zweite Client-Anwendung (130) zur Einrichtung eines zweiten Kommunikationskanals mit dem Peripheralsserver (170) konfiguriert ist und
wenigstens ein Teil des Netzwerks zur Speicherung einer Zuordnung zwischen dem ersten Kommunikationskanal und dem zweiten Kommunikationskanal konfiguriert ist, um die Peripherievorrichtung (140) der Rechnervorrichtung (110) zuzuordnen.

2. System nach Anspruch 1, wobei der Peripheralsserver (170) darüber hinaus zum Empfang von Nachrichten von der virtualisierten Anwendung (155) auf dem Virtualisierungsserver (150) und zum Senden der Nachrichten gemäß der Zuordnung an die Peripherievorrichtung (140) konfiguriert ist, und/oder wobei der Peripheralsserver (170) darüber hinaus zum Empfang von Nachrichten von der Peripherievorrichtung (175) und zum Senden der Nachrichten gemäß der Zuordnung an die virtualisierte Anwendung (155) auf dem Virtualisierungsserver (150) konfiguriert ist.

3. System nach Anspruch 1 oder 2, wobei der Peripheralsserver (170) zum Empfang einer die erste Client-Anwendung (120) identifizierenden ersten Kennung von dem Virtualisierungsserver (150) und zur Einrichtung der Zuordnung durch Abgleich der ersten Kennung mit einer die zweite Client-Anwendung (130) identifizierenden zweiten Kennung konfiguriert ist.

4. System nach Anspruch 3, wobei die erste Kennung eines oder mehrere von einem Namen einer Rechnervorrichtung (110), einer IP-Adresse der Rechnervorrichtung (110), einem Standort der Rechnervorrichtung (110), dem Flughafen und dem Terminal, an welchen sich die Rechnervorrichtung (110) befindet, und einem ersten durch die erste Client-Anwendung (120) und/oder die virtualisierte Anwendung (155) erstellten Schlüssel umfasst und die zweite Kennung eines oder mehrere von einem Namen einer Peripheralsschnittstelle in dem Flughafen, einer IP-Adresse der Peripheralsschnittstelle, einem Standort der Peripheralsschnittstelle, dem Flughafen und dem Terminal, an welchen sich die Peripheralsschnittstelle befindet, und einem zweiten durch die zweite Client-Anwendung (130) und/oder den Peripheralsserver (170) erstellten Schlüssel umfasst.

5. System nach einem der Ansprüche 1 bis 4, wobei der Virtualisierungsserver (150) oder die Rechnervorrichtung (110) den Peripheralsserver (170) umfasst oder der Peripheralsserver (170) auf einem von dem Virtualisierungsserver (150) getrennten Server oder auf einer von der Rechnervorrichtung (110) getrennten weiteren Rechnervorrichtung implementiert ist oder die Rechnervorrichtung (110) die Peripheralsschnittstelle umfasst.

6. System zur Virtualisierung einer Anwendung eines Flughafen-Passagierkontrollsystems, wobei sich das System in einem Netzwerk außerhalb des Flughafens befindet, wobei das System Folgendes umfasst:
einen Virtualisierungsserver (150), der zum Empfang einer Aufforderung von einer ersten Client-Anwendung (120), die in dem Flughafen zur Einrichtung eines ersten Kommunikationskanals zur kommunikativen Verbindung zwischen einer durch den Virtualisierungsserver (150) ausgeführten virtualisierten Anwendung (155) und der ersten Client-Anwendung (120) ausgeführt wird, und als Antwort darauf zur Einrichtung des ersten Kommunikationskanals konfiguriert ist, und
**dadurch gekennzeichnet, dass**:
das System darüber hinaus einen Peripheralsserver (170) umfasst, der zum Empfang einer Aufforderung von einer zweiten Client-Anwendung (130), die in dem Flughafen zur Einrichtung eines zweiten Kommunikationskanals zur kommunikativen Verbindung zwischen dem Peripheralsserver (170) und der zweiten Client-Anwendung (130) ausgeführt wird, und als Antwort darauf zur Einrichtung des zweiten Kommunikationskanals konfiguriert ist, und
das System zum Speichern einer Zuordnung zwischen dem ersten Kommunikationskanal und dem zweiten Kommunikationskanal, um eine Peripherievorrichtung (140) der ersten Client-Anwendung (120) in kommunikativer Verbindung mit der zweiten Client-Anwendung (130) zuzuordnen, konfiguriert ist.

7. System nach Anspruch 6, wobei der Peripheralsserver (170) darüber hinaus zum Empfang von Nachrichten von der virtualisierten Anwendung (155) auf dem Virtualisierungsserver (150) und zum Senden der Nachrichten gemäß der Zuordnung an die Peripherievorrichtung (140) konfiguriert ist, und/oder wobei der Peripheralsserver (170) darüber hinaus zum Empfang von Nachrichten von der Peripherievorrichtung (140) und zum Senden der Nachrichten gemäß der Zuordnung an die virtualisierte Anwendung (155) auf dem Virtualisierungsserver (150) konfiguriert ist.

8. System nach Anspruch 6 oder 7, wobei der Peripheralsserver (170) zum Empfang einer die erste Client-Anwendung (120) identifizierenden ersten Kennung von dem Virtualisierungsserver (150) und zur Einrichtung der Zuordnung durch Abgleich der ersten Kennung mit einer die zweite Client-Anwendung (130) identifizierenden zweiten Kennung konfiguriert ist.

9. System nach Anspruch 8, wobei die erste Kennung und die zweite Kennung abgeglichen werden, falls sie identisch sind.

10. System nach Anspruch 8 oder 9, wobei der Peripheralsserver (170) zum Abgleich der ersten Kennung und der zweiten Kennung, falls die erste Kennung und die zweite Kennung sich innerhalb eines vorgegebenen Schwellenwertes voneinander befinden, oder gemäß einer von der virtualisierten Anwendung (155) empfangenen Auswahl konfiguriert ist.

11. System nach einem der Ansprüche 8 bis 10, wobei die erste Kennung eines oder mehrere von einem Namen einer Rechnervorrichtung (110), einer IP-Adresse der Rechnervorrichtung (110), einem Standort der Rechnervorrichtung (110), dem Flughafen und dem Terminal, an welchen sich die Rechnervorrichtung (110) befindet, und einen ersten durch die erste Client-Anwendung (120) und/oder die virtualisierte Anwendung (155) erstellten Schlüssel umfasst und die zweite Kennung eines oder mehrere von einem Namen einer Peripheralsschnittstelle in dem Flughafen, einer IP-Adresse der Peripheralsschnittstelle, einem Standort der Peripheralsschnittstelle, dem Flughafen und dem Terminal, an welchen sich die Peripheralsschnittstelle befindet, und einen zweiten durch die zweite Client-Anwendung (130) und/oder den Peripheralsserver (170) erstellten Schlüssel umfasst.

12. System nach einem der Ansprüche 6 bis 11, wobei der Virtualisierungsserver (150) oder die Rechnervorrichtung (110) den Peripheralsserver (170) umfasst oder der Peripheralsserver (170) auf einem von dem Virtualisierungsserver (150) getrennten Server oder auf einer weiteren von der Rechnervorrichtung (110) getrennten Rechnervorrichtung implementiert ist oder die Rechnervorrichtung (110) die Peripheralsschnittstelle umfasst.

13. System zur Interaktion mit einer Peripherievorrichtung (140), die sich in einem Flughafen und einem Netzwerk außerhalb des Flughafens befindet, wobei das Netzwerk einen zur Einrichtung einer Virtualisierungsanwendung (155) konfigurierten Virtualisierungsserver (150) einschließt, wobei das System Folgendes umfasst:
eine Rechnervorrichtung (110), die sich in dem Flughafen befindet und zur Initialisierung einer ersten Client-Anwendung (120), zum Senden einer ersten Aufforderung an den Virtualisierungsserver (150) zur Einrichtung eines ersten Kommunikationskanals und zur Ermöglichung der Kommunikation mit der Virtualisierungsanwendung (155) konfiguriert ist,
**dadurch gekennzeichnet, dass**:
das Netzwerk darüber hinaus einen Peripheralsserver (170) umfasst;
das System darüber hinaus eine mit der Peripherievorrichtung (140) verbundene Peripheralsschnittstelle umfasst, wobei die Peripheralsschnittstelle zum Senden einer zweiten Aufforderung an den Peripheralsserver (170) zur Einrichtung eines zweiten Kommunikationskanals konfiguriert ist, und
die Rechnervorrichtung (110) darüber hinaus zum Senden einer ersten Kennung an den Virtualisierungsserver (170) konfiguriert ist und die Peripheralsschnittstelle darüber hinaus zum Senden einer zweiten Kennung an den Peripheralsserver (170) konfiguriert ist, um eine Zuordnung des ersten Kommunikationskanals zu dem zweiten Kommunikationskanal zu erleichtern.

14. System nach Anspruch 13, wobei die Peripheralsschnittstelle darüber hinaus zum Senden erster von dem Peripheralsserver (170) empfangener Daten an die Peripherievorrichtung (140) oder zum Senden zweiter von der Peripherievorrichtung (170) empfangener Daten an den Peripheralsserver (170) konfiguriert ist oder die Rechnervorrichtung (110) die Peripheralsschnittstelle umfasst.

15. System nach Anspruch 13 oder 14, wobei die erste Kennung eines oder mehrere von einem Namen der Rechnervorrichtung (110), einer IP-Adresse der Rechnervorrichtung (110), einem Standort der Rechnervorrichtung (110), dem Flughafen und dem Terminal, an welchen sich die Rechnervorrichtung (110) befindet, und einem ersten durch die erste Client-Anwendung (120) und/oder eine virtualisierte Anwendung (155) erstellten Schlüssel umfasst und die zweite Kennung eines oder mehrere von einem Namen der Peripheralsschnittstelle, einer IP-Adresse der Peripheralsschnittstelle, einem Standort der Peripheralsschnittstelle, dem Flughafen und dem Terminal, an welchen sich die Peripheralsschnittstelle befindet, und einen zweiten durch die Peripheralsschnittstelle und/oder den Peripheralsserver (170) erstellten Schlüssel umfasst.

## Revendications

1. Système destiné à gérer un système de traitement de passagers d'aéroport, le système comprenant :
un dispositif informatique (110) au niveau d'un aéroport, le dispositif informatique (110) étant configuré pour exécuter une première application client (120) ;
un dispositif périphérique (140) au niveau de l'aéroport ;
une interface de périphériques couplée avec le dispositif périphérique (140), l'interface de périphériques étant configurée pour exécuter une seconde application client (130) ; et
un réseau, en dehors de l'aéroport, le réseau comprenant :
un serveur de virtualisation (150) configuré pour virtualiser une application virtualisée (155) pour la première application client (120) ;
dans lequel la première application client (120) est configurée pour établir un premier canal de communication avec le serveur de virtualisation (150) pour une communication avec l'application virtualisée (155) au niveau du serveur de virtualisation (150) ;
**caractérisé en ce que** :
le système comprend en outre un serveur de périphériques (170) en connexion communicative avec le serveur de virtualisation (150) ;
la seconde application client (130) est configurée pour établir un second canal de communication avec le serveur de périphériques (170) ; et
au moins une partie du réseau est configurée pour stocker une association entre le premier canal de communication et le second canal de communication pour associer le dispositif périphérique (140) avec le dispositif informatique (110).

2. Système selon la revendication 1, dans lequel le serveur de périphériques (170) est en outre configuré pour recevoir des messages en provenance de l'application virtualisée (155) sur le serveur de virtualisation (150), et pour envoyer les messages, selon l'association, au dispositif périphérique (140) ; et/ou dans lequel le serveur de périphériques (170) est en outre configuré pour recevoir des messages en provenance du dispositif périphérique (175), et pour envoyer les messages, selon l'association, à l'application virtualisée (155) sur le serveur de virtualisation (150).

3. Système selon la revendication 1 ou 2, dans lequel le serveur de périphériques (170) est configuré de manière à recevoir, en provenance du serveur de virtualisation (150), un premier identifiant qui identifie la première application client (120), et à établir l'association en mettant en correspondance le premier identifiant et un second identifiant qui identifie la seconde application client (130).

4. Système selon la revendication 3, dans lequel le premier identifiant comprend un ou plusieurs éléments parmi un nom d'un dispositif informatique (110), une adresse IP du dispositif informatique (110), un emplacement du dispositif informatique (110), l'aéroport et une borne où est situé le dispositif informatique (110), et une première clé générée par la première application client (120) et/ou l'application virtualisée (155), et le second identifiant comprend un ou plusieurs éléments parmi un nom d'une interface de périphériques au niveau de l'aéroport, une adresse IP de l'interface de périphériques, un emplacement de l'interface de périphériques, l'aéroport et la borne où est située l'interface de périphériques, et une seconde clé générée par la seconde application client (130) et/ou le serveur de périphériques (170).

5. Système selon l'une quelconque des revendications 1 à 4, dans lequel le serveur de virtualisation (150) ou le dispositif informatique (110) comprend le serveur de périphériques (170), ou le serveur de périphériques (170) est mis en oeuvre sur un serveur distinct du serveur de virtualisation (150) ou sur un dispositif informatique supplémentaire distinct du dispositif informatique (110), ou le dispositif informatique (110) comprend l'interface de périphériques.

6. Système pour virtualiser une application d'un système de commande de passagers d'aéroport, le système étant situé dans un réseau en dehors de l'aéroport, le système comprenant :
un serveur de virtualisation (150) configuré pour recevoir une demande d'une première application client (120) exécutée au niveau de l'aéroport, pour établir un premier canal de communication en vue d'une connexion communicative entre une application virtualisée (155) exécutée par le serveur de virtualisation (150) et la première application client (120) et, en réponse, établir le premier canal de communication ; et
**caractérisé en ce que** :
le système comprend en outre un serveur de périphériques (170) configuré pour recevoir une demande d'une seconde application client (130) exécutée au niveau de l'aéroport, pour établir un second canal de communication en vue d'une connexion communicative entre le serveur de périphériques (170) et la seconde application client (130) et, en réponse, établir le second canal de communication ; et
le système est configuré pour stocker une association entre le premier canal de communication et le second canal de communication, pour associer un dispositif périphérique (140), en connexion communicative avec la seconde application client (130), à la première application client (120).

7. Système selon la revendication 6, dans lequel le serveur de périphériques (170) est en outre configuré pour recevoir des messages en provenance de l'application virtualisée (155) sur le serveur de virtualisation (150), et pour envoyer les messages, selon l'association, au dispositif périphérique (140) ; et/ou dans lequel le serveur de périphériques (170) est en outre configuré pour recevoir des messages en provenance du dispositif périphérique (140), et pour envoyer les messages, selon l'association, à l'application virtualisée (155) sur le serveur de virtualisation (150).

8. Système selon la revendication 6 ou 7, dans lequel le serveur de périphériques (170) est configuré pour recevoir, du serveur de virtualisation (150), un premier identifiant qui identifie la première application client (120), et à établir l'association en mettant en correspondance le premier identifiant et un second identifiant qui identifie la seconde application client (130).

9. Système selon la revendication 8, dans lequel le premier identifiant et le second identifiant sont mis en correspondance s'ils sont identiques.

10. Système selon la revendication 8 ou 9, dans lequel le serveur de périphériques (170) est configuré pour mettre en correspondance le premier identifiant et le second identifiant si le premier identifiant et le second identifiant sont mutuellement compris dans un seuil prédéfini, ou selon une sélection reçue de l'application virtualisée (155).

11. Système selon l'une quelconque des revendications 8 à 10, dans lequel le premier identifiant comprend un ou plusieurs éléments parmi un nom d'un dispositif informatique (110), une adresse IP du dispositif informatique (110), un emplacement du dispositif informatique (110), l'aéroport et la borne où est situé le dispositif informatique (110), et une première clé générée par la première application client (120) et/ou l'application virtualisée (155), et le second identifiant comprend un ou plusieurs éléments parmi un nom d'une interface de périphériques au niveau de l'aéroport, une adresse IP de l'interface de périphériques, un emplacement de l'interface de périphériques, l'aéroport et la borne où est située l'interface de périphériques, et une seconde clé générée par la seconde application client (130) et/ou le serveur de périphériques (170).

12. Système selon l'une quelconque des revendications 6 à 11, dans lequel le serveur de virtualisation (150) ou le dispositif informatique (110) comprend le serveur de périphériques (170), ou le serveur de périphériques (170) est mis en oeuvre sur un serveur distinct du serveur de virtualisation (150) ou sur un dispositif informatique supplémentaire distinct du dispositif informatique (110), ou le dispositif informatique (110) comprend l'interface de périphériques.

13. Système destiné à interagir avec un dispositif périphérique (140) situé au niveau d'un aéroport et un réseau à l'extérieur de l'aéroport, le réseau incluant un serveur de virtualisation (150) configuré pour exécuter une application de virtualisation (155), le système comprenant :
un dispositif informatique (110) situé au niveau de l'aéroport et configuré pour initialiser une première application client (120), à envoyer une première demande, visant à établir un premier canal de communication, au serveur de virtualisation (150), et à permettre la communication avec l'application de virtualisation (155) ;
**caractérisé en ce que** :
le réseau comprend en outre un serveur de périphériques (170) ;
le système comprend en outre une interface de périphériques couplée avec le dispositif périphérique (140), l'interface de périphériques étant configurée pour envoyer une seconde demande, visant à établir un second canal de communication, au serveur de périphériques (170) ; et
le dispositif informatique (110) est en outre configuré pour envoyer un premier identifiant au serveur de virtualisation (170), et l'interface de périphériques est en outre configurée pour envoyer un second identifiant au serveur de périphériques (170), afin de faciliter une association du premier canal de communication et du second canal de communication.

14. Système selon la revendication 13, dans lequel l'interface de périphériques est en outre configurée pour envoyer des premières données reçues en provenance du serveur de périphériques (170) au dispositif périphérique (140), ou à envoyer des secondes données reçues du dispositif périphérique (170) au serveur de périphériques (170), ou dans lequel le dispositif informatique (110) comprend l'interface de périphériques.

15. Système selon la revendication 13 ou 14, dans lequel le premier identifiant comprend un ou plusieurs des éléments parmi un nom du dispositif informatique (110), une adresse IP du dispositif informatique (110), un emplacement du dispositif informatique (110), l'aéroport et la borne où est situé le dispositif informatique (110), et une première clé générée par la première application client (120) et/ou une application virtualisée (155), et le second identifiant comprend un ou plusieurs des éléments parmi un nom de l'interface de périphériques, une adresse IP de l'interface de périphériques, un emplacement de l'interface de périphériques, l'aéroport et la borne où est située l'interface de périphériques, et une seconde clé générée par l'interface de périphériques et/ou le serveur de périphériques (170).
